# EUROPEAN PATENT APPLICATION

(11) **EP 4 468 163 A1**
(43) Date of publication of application: **27.11.2024**
(21) Application number: 23759261.3
(22) Date of filing: 24.02.2023
(51) Int. Cl.: G06F 13/30

(54) **DATA PROCESSING METHOD, DIRECT MEMORY ACCESS ENGINE AND COMPUTING DEVICE**

(30) Priority: 24.02.2022 CN 202210172625; 31.03.2022 CN 202210345755
(71) Applicant: Huawei Technologies Co., Ltd., Shenzhen, Guangdong 518129 (CN)
(72) Inventor: ZHANG, Wei, Shenzhen, Guangdong 518129 (CN); SHEN, Guohua, Shenzhen, Guangdong 518129 (CN); SHEN, Shu, Shenzhen, Guangdong 518129 (CN)
(74) Representative: Epping - Hermann - Fischer
(86) International application number: PCT/CN2023/078028
(87) International publication number: WO 2023/160639

(57) **Abstract**

A data processing method, a direct memory access DMA engine, and a computing device are disclosed. The data processing method includes: A DMA engine of a first computing device obtains encrypted data that is to be processed in a rich execution environment REE of the first computing device, where the first computing device includes the REE running a general operating system and a trusted execution environment TEE running a trusted operating system; migrates the encrypted data to the TEE; and performs a decryption operation on the encrypted data in a process of migrating the encrypted data to the TEE, to obtain decrypted data. In this way, the DMA engine performs hardware offloading on a decryption function of a CPU.

## Description

This application claims priority to Chinese Patent Application No. 202210172625.0, filed with the China National Intellectual Property Administration on February 24, 2022 and entitled "DATA PROCESSING METHOD", and claims priority to Chinese Patent Application No. 202210345755.X, filed on March 31, 2022 and entitled "DATA PROCESSING METHOD, DIRECT MEMORY ACCESS ENGINE, AND COMPUTING DEVICE", which are incorporated herein by reference in their entireties.

### TECHNICAL FIELD

This application relates to the computer field, and in particular, to a data processing method, a direct memory access engine, and a computing device in the security field.

### BACKGROUND

With enhancement of computing power of a data center, based on regulatory advantages such as easy capacity expansion and easy maintenance, more and more enterprises and institutions deploy software applications (for example, big data software such as Spark and a data virtualization engine openLooKeng) of the enterprises and institutions in the data center, to meet a requirement of an efficient data circulation. Efficient data circulation depends on a trusted data circulation system. However, cross-enterprise and cross-industry data interoperability usually face many barriers due to a security issue of data transmission. As a result, data circulation is poor, and development of the digital economy is severely restricted. It is proposed, in a conventional technology, that data encryption and decryption are applied to enhance data security in a data transmission process. However, over the foregoing processing process, a central processing unit (central processing unit, CPU) of a computing device needs to frequently perform data copy, encryption, and decryption operations by using a memory. This occupies a resource of the CPU, and affects system performance. Therefore, how to improve data processing performance becomes an urgent technical problem to be resolved.

### SUMMARY

This application provides a data processing method, a direct memory access engine, and a computing device, to improve data processing performance.

According to a first aspect, a data processing method is provided. A direct memory access DMA engine of a first computing device may obtain encrypted data that is to be processed in a rich execution environment REE of the computing device; perform an operation of migrating the encrypted data to a trusted execution environment TEE; and perform a decryption operation on the encrypted data in a process of migrating the encrypted data to the TEE, to obtain decrypted data. The first computing device includes the REE running a general operating system and the TEE running a trusted operating system.

The DMA engine can perform the decryption operation on the encrypted data in the process of migrating the encrypted data to the TEE, that is, the DMA engine can implement the decryption operation on the encrypted data in an inline decryption manner. Therefore, the DMA engine offloads a decryption function of a CPU of the computing device, to avoid a problem that a resource of the CPU is occupied and system performance is affected. In addition, data processing efficiency is also improved by completing the decryption operation in a data transmission process.

In a possible implementation, the computing device further includes a processor and a memory, the processor separately runs a client application CA and a trusted application TA, the memory includes a shared memory and a CA-associated memory, the shared memory is accessible to the trusted application TA, and the DMA engine may copy, to the shared memory, the encrypted data stored in the CA-associated memory. It can be learned from the foregoing descriptions that, a process of performing data migration by the DMA engine is specifically that the DMA engine needs to first copy the encrypted data to the shared memory of the computing device before performing data decryption. The shared memory allows access of the TA. Therefore, after the DMA engine completes the decryption operation, the TA may obtain the decrypted data from the shared memory, and further perform a data processing operation, to implement continuity of a data processing process after the DMA engine offloads the decryption operation.

In another possible implementation, the DMA engine performs the decryption operation on the encrypted data in a sequence of obtaining the encrypted data and other encrypted data and based on an identity key associated with the encrypted data, to obtain the decrypted data. It can be learned from the foregoing descriptions that, the DMA engine may obtain a plurality of pieces of encrypted data. In a decryption process, decryption operations may be sequentially performed in a sequence of obtaining the plurality of pieces of encrypted data, and the decryption operation may be performed on each piece of encrypted data based on an identity key associated with the encrypted data.

In another possible implementation, the shared memory includes a first queue associated with the DMA engine, the first queue includes a plurality of entries ENTRY, and the first queue is used to store the encrypted data that is to be processed. The DMA engine may copy the encrypted data to a first ENTRY, where the first ENTRY is one of the plurality of ENTRIES. To-be-processed data is stored by using a queue, and the DMA engine may sequentially perform decryption operations on the encrypted data in a first-in-first-out order, to ensure that a sequence of performing the decryption operations is consistent with a sequence of obtaining the encrypted data, and avoid a data inconsistency problem caused by disorder of the encrypted data.

Optionally, the first queue may be a ring queue.

In another possible implementation, the memory of the first computing device further includes a TA-associated memory, and the TA may obtain the decrypted data from the shared memory, then store the decrypted data in the TA-associated memory, and perform a data processing operation on the decrypted data, to obtain a data processing result. It can be learned from the foregoing descriptions that, after the DMA engine completes the decryption operation, the TA can access the shared memory, to be specific, the TA can obtain the decrypted data in the shared memory, then complete the data processing operation on the decrypted data in the TEE, and obtain the data processing result. Therefore, because the decrypted data is stored in the TEE and data processing is performed in the TEE, security of data processing and storage is ensured.

In another possible implementation, the TA obtains the decrypted data from the shared memory in a DMA manner. Because the TA can directly obtain the decrypted data from the shared memory in the DMA manner, a data obtaining speed is increased, and data processing efficiency is further improved.

In another possible implementation, the first computing device further includes a storage device, the storage device includes a TA namespace, and the method further includes: The TA stores a first intermediate result in the TA namespace, where the first intermediate result includes an intermediate result of performing the data processing operation on the encrypted data. A storage resource in the TEE environment is limited, a size of space of the TA-associated memory is fixed, and a large amount of temporary data such as the intermediate result is often generated in a data processing process of big data software. Therefore, if available space of the TA-associated memory is insufficient, the temporary data cannot be stored, resulting in a data processing failure. The TA namespace is set in the storage device of the computing device, so that a capacity of available storage space of the TA is extended, and data processing can be successfully performed.

In another possible implementation, the storage device includes a controller. Before the first intermediate result is stored in the TA namespace, the controller performs an encryption operation on the first intermediate result, to obtain encrypted data of the first intermediate result. Before temporary data such as the intermediate result is stored in the TA namespace, the controller of the storage device performs the encryption operation on the intermediate result, and then stores an encrypted intermediate result in the storage device. This can further improve security of data storage when extending the available storage space of the TA.

In another possible implementation, when available space of the TA-associated memory is less than a size of the first intermediate result, the first intermediate result is stored in the TAnamespace. To be specific, when the available space of the TA-associated memory is less than the size of the intermediate result, the intermediate result may be stored by using an extended TA namespace, thereby ensuring integrity of a data processing process.

In another possible implementation, the first computing device further includes a network interface card, the network interface card runs a TA in a secure state, the TA run by a CPU of the computing device copies the data processing result to a storage area associated with the TA in the secure state in the network interface card, and the TA in the secure state performs an encryption operation on the data processing result.

To further offload an encryption function of the CPU by the network interface card, the network interface card may run the TA in the secure state, and perform the encryption operation on the data processing result when the TA copies the data processing result to the storage area associated with the TA in the secure state in the network interface card. In this way, the network interface card offloads the encryption function of the CPU, to avoid a case in which a resource of the CPU is occupied due to the encryption operation.

In another possible implementation, that the TA in the secure state performs the encryption operation on the data processing result includes: The TA in the secure state performs the encryption operation on the data processing result in a process of receiving the data processing result, to obtain an encrypted data processing result. It can be learned from the foregoing descriptions that, the TA in the secure state of the network interface card may perform the encryption operation on the data processing result in an inline encryption manner, to be specific, perform the encryption operation in the process of receiving the data processing result. The network interface card not only offloads an encryption function of the CPU, but also improves data processing efficiency in an inline decryption manner.

In another possible implementation, the TA in the secure state sends the encrypted data processing result to a second computing device.

In another possible implementation, the network interface card further includes a CA in a non-secure state, the CA in the non-secure state and the TA in the secure state are run in a processor of the network interface card, and resources used by the CA in the non-secure state and the TA in the secure state to transmit data are isolated from each other. The network interface card is divided to obtain the TA in the secure state and the CA in the non-secure state that are isolated from each other, so that the network interface card can run in different environments by using different applications, receive the data processing result in the TEE environment, and perform the encryption operation on the data processing result. The network interface card not only offloads a data encryption function of the CPU, but also improves data processing efficiency because the network interface card can encrypt the data processing result in an inline encryption manner.

According to a second aspect, a DMA engine is provided. The DMA engine includes a processor and a storage device, the storage device stores computer program instructions, and the processor executes the computer program instructions, to implement functions of operation steps performed by the DMA engine in any one of the first aspect or the possible implementations of the first aspect.

In a possible implementation, the DMA engine is integrated into a processor of a computing device in which the DMA engine is located, the DMA engine, the processor, a network interface card of the computing device, a storage device of the computing device, and a memory of the computing device are connected through a bus, and the bus includes at least one of a peripheral component interconnect express PCIe bus, a compute express link CXL bus, and a unified bus UB.

In another possible implementation, the DMA engine is independent hardware, a processor of a computing device in which the DMA engine is located, the DMA engine, a network interface card of the computing device, a storage device of the computing device, and a memory of the computing device are connected through a bus, and the bus includes at least one of a peripheral component interconnect express PCIe bus, a compute express link CXL bus, and a unified bus UB.

Optionally, the DMA engine is implemented by a system on chip. The system on chip includes the processor and the storage device. The storage device is an on-chip cache. The on-chip cache is configured to store the computer program instructions. The processor executes the computer program instructions stored in the on-chip cache, to implement functions of operation steps performed by the DMA engine in any one of the first aspect or the possible implementations of the first aspect.

According to a third aspect, a DMA engine is provided. The DMA engine includes a processor and a power supply circuit, the power supply circuit is configured to supply power to the processor, and the processor may be implemented by using a hardware logic circuit. For example, an application-specific integrated circuit ASIC implements a function of the DMA engine. The power supply circuit may be located in a same chip as the processor, or may be located in a chip other than the chip in which the processor is located. The processor executes computer program instructions, to implement functions of operation steps performed by the DMA engine in any one of the first aspect or the possible implementations of the first aspect.

In a possible implementation, the DMA engine is integrated into a processor of a computing device in which the DMA engine is located, the DMA engine, the processor, a network interface card of the computing device, a storage device of the computing device, and a memory of the computing device are connected through a bus, and the bus includes at least one of a peripheral component interconnect express PCIe bus, a compute express link CXL bus, and a unified bus UB.

In another possible implementation, the DMA engine is independent hardware, a processor of a computing device in which the DMA engine is located, the DMA engine, a network interface card of the computing device, a storage device of the computing device, and a memory of the computing device are connected through a bus, and the bus includes at least one of a peripheral component interconnect express PCIe bus, a compute express link CXL bus, and a unified bus UB.

According to a fourth aspect, a data transmission method is provided. The method is performed by a first computing device, and includes: receiving a data processing request in a rich execution environment REE of the first computing device, where the data processing request includes encrypted data that is to be processed, and the first computing device includes the REE running a general operating system and a trusted execution environment TEE running a trusted operating system; transmitting the encrypted data to the TEE, and performing a decryption operation on the encrypted data in an inline decryption manner, to obtain decrypted data, where the inline decryption manner indicates to decrypt the encrypted data; and obtaining, in the TEE, a data processing result based on the decrypted data and the data processing request, performing an encryption operation on the data processing result, and sending an encrypted data processing result to a second computing device.

According to a fifth aspect, a computing device is provided. The computing device includes a direct memory access DMA engine, a processor, a network interface card, and a storage device, and the DMA engine, the processor, and the network interface card are respectively configured to perform operation steps of a cluster management method in any one of the first aspect or the possible implementations of the first aspect.

According to a sixth aspect, a computer-readable storage medium is provided, and includes computer software instructions. When the computer software instructions are run on a computing device, the computing device is enabled to perform operation steps of the method in any one of the first aspect or the possible implementations of the first aspect.

According to a seventh aspect, a computer program product is provided. When the computer program product runs on a computer, a computing device is enabled to perform operation steps of the method in any one of the first aspect or the possible implementations of the first aspect.

According to an eighth aspect, a chip system is provided. The chip system includes a processor, configured to implement a function of the processor in the method in the first aspect. In a possible design, the chip system further includes a storage device, configured to store program instructions and/or data. The chip system may include a chip, or may include a chip and another discrete component.

In this application, based on the implementations provided in the foregoing aspects, the implementations may be combined to provide more implementations.

### BRIEF DESCRIPTION OF DRAWINGS

FIG. 1 is a diagram of a logical architecture of a data processing system according to an embodiment of this application;
FIG. 2 is a schematic flowchart of a data processing method according to an embodiment of this application;
FIG. 3 is a schematic flowchart of another data processing method according to an embodiment of this application;
FIG. 4 is a schematic flowchart of another data processing method according to an embodiment of this application; and
FIG. 5 is a diagram of a structure of a data processing apparatus 500 according to an embodiment of this application

### DESCRIPTION OF EMBODIMENTS

For ease of description, terms used in this application are first explained.

A rich execution environment (Rich Execution Environment, REE) is an untrusted environment in which a general operating system (operating system, OS) is deployed on a computing device or an intelligent device. A security issue such as sensitive data transmission is not considered in the rich execution environment.

The general operating system may also be referred to as an REE OS, and is an associated system software program that manages and controls an operation of the computing device, uses and runs hardware and software resources, and provides a common service to organize user interaction.

A client application (Client Application, CA) is also referred to as an untrusted application, and is software that is run in the rich execution environment, and a plurality of CAs may be run in a same rich execution environment.

A trusted execution environment (Trusted Execution Environment, TEE) may also be referred to as a secure world (Secure World), a secure execution environment, or a trusted hardware execution environment, and is more secure than the rich execution environment. A trusted operating system may be deployed in a security zone of the computing device or the intelligent device, to obtain a trusted environment in which storage and processing of sensitive data is ensured. End-to-end security over sensitive data transmission and processing is ensured by implementing protection, confidentiality, integrity, and data access permission. The computing device includes a system, for example, a server, an edge server, a worker, or a personal computer (personal computer, PC), configured to perform data processing. The intelligent device includes a smartphone, a tablet computer, or any mobile device.

The trusted operating system may also be referred to as a secure operating system or a TEE OS, and includes a Euler operating system (openEurla), a Trustzone (Trustzone) operating system, a Trustonic operating system, a Qualcomm QSEE, an open-source OPTEE, and the like.

A trusted application (Trusted Application, TA) is a software program that is run in the trusted operating system, and grants software access permission through permission management and control, signature authentication, and the like. A same TEE may include a plurality of TAs that are isolated from each other. For example, a plurality of applications such as fingerprint comparison and private key signature during payment may all be run in the trusted execution environment, to ensure security over processing and transmission of g sensitive data such as a private key signature and a fingerprint.

It should be noted that the trusted application and the client application cannot implement cross-environment data access. To be specific, the trusted application can be run only in the trusted execution environment, can perform data access and processing in the trusted execution environment, and cannot access data in the rich execution environment. Correspondingly, the client application can be run only in the rich execution environment, can perform data access and processing in the rich execution environment, and cannot access data in the trusted execution environment.

In a conventional technology, software (for example, big data software) that has a requirement for secure data transmission is usually deployed in a data processing system that is based on an architecture in which the TEE and the REE coexist. The data processing system includes a plurality of computing devices, and one computing device includes both the REE running the REE OS and the TEE running the TEE OS. For example, the big data software is openLooKeng. openLooKeng is an open-source high-performance data virtualization engine, can provide unified interfaces for SQL, has an analysis capability across data sources/data centers, and supports converged queries for interactive, batch, and stream scenarios. openLooKeng may run a data processing process involving sensitive data. openLooKeng may be deployed in the data processing system including the plurality of computing devices, and each computing device includes both the REE running the REE OS and the TEE running the TEE OS. In addition, a big data processing engine (for example, a Java engine) is further deployed in the REE OS of the computing device of the data processing system. For a processing process involving sensitive user data, the big data processing engine may obtain a data processing request (for example, a filtering processing request or an aggregation processing request) received over an application programming interface (application programming interface, API) of the data processing system, and select, based on a service requirement, a combination of the TA and/or the CA that implements a specific function to complete a specific operation of the data processing request. The combination of the TA and/or the CA includes one or more TAs; one or more CAs; or one or more TAs and one or more CAs. The combination may be specifically configured based on the service requirement. For ease of description, the following embodiments are described by using an example in which data processing requires only a combination of one CA and one TA to complete an aggregation operation.

For example, in the REE of the computing device, the big data processing engine sends, to the CA, encrypted data that is to be processed, and then the CA stores the encrypted data in a shared memory accessible to the TA, so that the TA can obtain the encrypted data in the TEE, and perform a decryption operation on the encrypted data and an operation of the data processing request, to obtain a data processing result. Then, the TA encrypts the data processing result of the data processing request, and stores an encrypted result in the shared memory accessible to the CA, so that the CA transfers the encrypted data processing result to the big data processing engine. Then, the big data processing engine sends the encrypted data processing result to a network interface card of the computing device, and the network interface card sends the encrypted data processing result to another computing device. It can be learned from the foregoing processing process that, in a process of migrating the encrypted data from the REE to the TEE, a plurality of times of copy, encryption, and decryption processing are required. For a central processing unit (central processing unit, CPU) running the TA and the CA, a performance loss is extremely high because the foregoing processing process needs to occupy a large quantity of computing resources of the CPU, storage resources, and network resources. In addition, the data processing result in the TEE needs to be encrypted and then copied to the shared memory, and then transferred by the CA and the big data processing engine to the network interface card. A data transmission path in the entire process is long, a performance loss is severe, and system performance decreases by at least 10 times.

To improve performance of secure data transmission, in this application, a direct memory access (direct memory access, DMA) engine may be used to perform the decryption operation on the encrypted data in the process of migrating the encrypted data from the REE to the TEE, so that the TA in the TEE can obtain decrypted data and perform data processing, avoiding a problem in a conventional technology that a resource of the CPU is occupied, and performance of system data processing is affected because data needs to be frequently copied between the CPU and a memory when the CA and the TA perform data migration and decryption, and the CPU in which the TA is located needs to frequently interact with the memory due to the data decryption operation performed by the TA. In another aspect, because an amount of temporary data such as an intermediate result of big data processing is large, and a storage resource that can be used by the TEE to store the temporary data is limited, a phenomenon of a processing failure is very likely to occur due to the insufficient storage resource. This application further proposes a solution of extending the storage resource of the TEE by using a storage device. Based on a namespace (Namespace) technology, an independent TA namespace and an independent CA namespace are separately configured in the storage device, so that a same storage device supports both REE computing and TEE computing, to implement expansion of an available storage resource of the TEE. In the namespace technology, a namespace is a place for storing variables, and modularization is supported by preventing a name conflict. An identifier defined in a namespace does not conflict with an existing identifier. For the CA namespace and the TA namespace, the CA namespace is visible only to the CA, and the TA namespace is visible only to the TA. In this way, extended storage resources of the CA and the TA are isolated, thereby ensuring security of data storage. In addition, to further ensure security of data storage, a controller of the storage device may determine, based on an address of an input/output (input/output, I/O) request from the TA or the CA, to access the TA namespace or the CA namespace, and perform encryption processing before data is stored in the TA namespace, to ensure security of the data stored in the TA namespace. In still another aspect, the network interface card of the computing device supports coexistence of a CA in a non-secure state and a TA in a secure state, and resources used by the CA in the non-secure state and the TA in the secure state to transmit data are isolated from each other, to ensure that the CA in the non-secure state cannot obtain data of the TA in the secure state. Because the TA in the secure state of the network interface card can implement inline encryption processing on the data processing result, problems such as CPU resource occupation and a resource loss that are caused by encryption processing performed by the TA that is run in the CPU are avoided, and a function of the CPU is offloaded, thereby further improving data processing efficiency.

The following describes, in detail with reference to the accompanying drawings, a data processing method provided in this application.

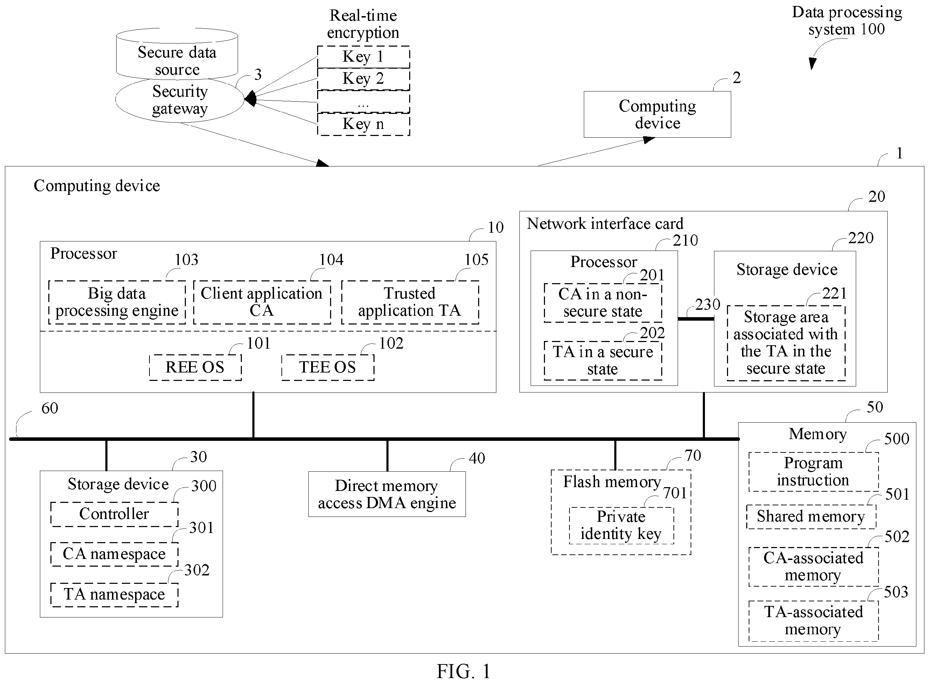

FIG. 1 is a diagram of a structure of a data processing system 100 according to this application. As shown in the figure, the data processing system 100 includes a security gateway 3 and a plurality of computing devices, for example, a computing device 1 and a computing device 2.

The security gateway 3 is configured to perform real-time encryption on data of a secure data source. Specifically, a same encryption algorithm may be used to encrypt different data, or a plurality of encryption algorithms may be respectively used to encrypt different data, to obtain encrypted data. Each algorithm includes a key (key), and the encrypted data includes an identifier of an encryption algorithm used for encrypting the data and a length of the encrypted data. Optionally, data in big data software may be transmitted in a streaming manner. To be specific, an amount of to-be-processed data continuously increases and a sequence relationship exists between the data. Optionally, the encrypted data may further include a serial number used to record a ranking of current encrypted data in a data stream.

The big data software is deployed on the computing device 1, to implement a processing process of the big data software, for example, receiving encrypted data, encrypting a processing result of the encrypted data, and sending an encrypted processing result to the computing device 2. Both a trusted operating system and a general operating system are deployed in the computing device 1, to be specific, the computing device 1 includes a TEE running the trusted operating system and an REE running the general operating system. The computing device 1 includes a processor 10, a network interface card 20, a storage device 30, a DMA engine 40, and a memory 50. The processor 10, the network interface card 20, the storage device 30, the DMA engine 40, and the memory 50 are coupled through a bus 60.

The following separately describes functions of the components in the computing device 1.

The processor 10 is configured to deploy an REE OS 101 and a TEE OS 102, where a big data engine 103 and a CA 104 are run in the REE OS 101, and a TA 105 is run in the TEE OS 102. For a processing process involving sensitive user data, the big data processing engine 103 may obtain a data processing request (for example, a filtering processing request or an aggregation processing request) received over an application programming interface API of the data processing system, and select, based on a service requirement, a combination of the TA and/or the CA that implements a specific function to complete a specific operation of the data processing request. The processor 10 may be a CPU, or may be another general-purpose processor, a digital signal processor (digital signal processor, DSP), an application-specific integrated circuit (application-specific integrated circuit, ASIC), a field programmable gate array (field-programmable gate array, FPGA), a programmable logic device (programmable logic device, PLD), a complex programmable logic device (complex programmable logic device, CPLD), generic array logic (generic array logic, GAL), a system on chip (system on chip, SoC) or another programmable logic device, a discrete gate or transistor logic device, a discrete hardware component, or the like. The general-purpose processor may be a microprocessor, any conventional processor, or the like.

It should be noted that a quantity and a type of the processor 10 in FIG. 1 do not constitute a limitation on embodiments of this application. During specific implementation, there may be one or more processors 10, and there may be one or more types of processors 10. In addition, the REE OS 101 and the TEE OS 102 may be run in one processor 10, or may be run in different processors 10.

The network interface card 20 may also be referred to as an intelligent network interface card (intelligent network interface card, iNIC) or a data processing unit (data processing unit, DPU), and is configured to implement communication connections between the computing device 1 and the security gateway 3 and between the computing device 2 and the security gateway 3. The network interface card 20 includes a processor 210 and a storage device 220, and the processor 210 and the storage device 220 are interconnected through a bus 230. The bus 230 may be implemented by using an internal bus, for example, an HT (HyperTransport) bus, or may be implemented by using a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), or a cache coherent interconnect for accelerators (cache coherent interconnect for accelerators, CCIX).

A TA 202 in a secure state and a CA 201 in a non-secure state are run in the processor 210. The TA 201 in the secure state is configured to perform data processing in the TEE environment, and the CA 202 in the non-secure state is configured to perform data processing in the REE environment. Specifically, the TA 202 in the secure state and the CA 201 in the non-secure state with isolated resources and that are required in a data processing process may be implemented by using a firmware (Firmware, FW) program separately, so that the CA 201 in the non-secure state cannot obtain data of the TA 202 in the secure state. In other words, different firmware is used to implement functions of the CA 201 in the non-secure state and the TA 202 in the secure state, and storage areas associated with the CA 201 in the non-secure state and the TA 202 in the secure state are also isolated from each other. The storage area associated with the TA in the secure state can be accessed and used only by the TA 202 in the secure state, and the storage area associated with the CA in the non-secure state can be accessed and used only by the CA 201 in the non-secure state. In addition, network interface card drivers are respectively installed in the REE OS 101 and the TEE OS 102, so that kernels (kernels) of the REE OS 101 and the TEE OS 102 can identify the network interface card 20, and respectively allocate physical functions (physical functions, PFs) to the network interface card 20 in an initial phase of the system, so that the CA 104 and the TA 105 can be respectively scheduled by the REE OS 101 and the TEE OS 102. For the network interface card 20, the network interface card 20 is associated with two PFs, the two PFs share a same internet protocol (Internet Protocol, IP) address, and the security gateway 3 and the computing device 2 do not sense the CA in the non-secure state and the TA in the secure state. In addition, the network interface card 20 further needs to obtain authorization from the TEE OS 102, in other words, the network interface card 20 implements validity authentication with the TEE, to obtain an identity key 702, so that the TAin the secure state can perform an inline encryption operation on data in the TEE. The identity key 702 matches a key used by the security gateway 3 to encrypt the secure data source.

The storage device 220 of the network interface card 2 includes a storage area 221 associated with the TA in the secure state and a storage area (not shown in the figure) associated with the CAin the non-secure state. The storage area 221 associated with the TA in the secure state is used to store temporary data such as a data processing result of encrypted data that is to be processed by the TA 202 in the secure state and an intermediate result generated in a process of encrypting the data processing result. The storage area associated with the CA in the non-secure state is used to store temporary data such as data associated with the CA in the non-secure state and an intermediate result.

The storage device 30 is configured to implement a CA namespace 301 and a TA namespace 302. Space sizes of the CA namespace 301 and the TA namespace 302 are related to storage space of the storage device 30. For example, the CA namespace 301 and the TA namespace 302 may separately be set to a fixed size based on available storage space at delivery. The sizes of the CA namespace 301 and the TA namespace 302 may be the same or may be different, and may be specifically set based on a service requirement. The storage device 30 may be implemented by using a solid-state drive (solid-state drive, SSD), or may be implemented by using a mechanical hard disk drive (hard disk drive, HDD), or may be implemented by using a storage medium such as a storage class memory (storage class memory, SCM).

The storage device 30 further includes a controller 300. The controller 200 may determine, based on an I/O request delivered by the TA or the CA, to access the TA namespace or the CA namespace, and perform encryption processing before data is stored in the TA namespace, to ensure security of the data stored in the TA namespace.

The DMA engine 40 is configured to implement, using hardware, a function of decryption offloading, to be specific, the DMA engine 40 may be configured to implement a function of decrypting the encrypted data in a process of data migration between the REE and the TEE, to avoid CPU resource occupancy and improve data performance.

The memory 50 is configured to provide a shared memory 501 for the DMA engine, so that the DMA engine performs a decryption operation. Optionally, the memory 50 is further configured to store program instructions. In addition, the REE OS 101 and the TEE OS 102 further respectively allocate memory resources, for example, a CA-associated memory 502 and a TA-associated memory 503, to the CA 104 and the TA 105, so that the CA 104 and the TA 105 can store the to-be-processed data or the intermediate result of data processing. The CA-associated memory 502 is storage space allocated to the CA 104 in the memory 50, and correspondingly, the TA-associated memory 503 is storage space allocated to the CA 105 in the memory 50.

The memory 50 may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In addition to a data bus, the bus 60 may further include a power bus, a control bus, a status signal bus, and the like. However, for clear description, various buses are all marked as the bus 60 in the figure. The bus 60 may be a peripheral component interconnect express (PCIe) bus, an extended industry standard architecture (EISA) bus, a unified bus (UB), a compute express link (CXL), a cache coherent interconnect for accelerators (CCIX), or the like.

Optionally, to improve security in a data processing process of the computing device 1, the computing device 1 may further store, by using an independent component, an identity key 701 required for data encryption and decryption. For example, the computing device further includes a flash memory 70, and the flash memory 70 is configured to store the identity key 701 required for encryption and decryption operations. The identity key 701 is used to encrypt and decrypt data. To improve security of data processing of the computing device 2, the flash memory 70 may set access permission for a specified component, for example, allow access of only the network interface card 20 and the DMA engine 40, so that the network interface card 20 and the DMA engine 40 can perform the data encryption or decryption operation based on the identity key 701.

Optionally, the flash memory 70 may further store an equipment serial number (equipment serial number, ESN).

It should be noted that the computing device 1 shown in FIG. 1 is merely an example, and does not constitute a limitation on the data processing method disclosed in this application. During specific implementation, the computing device 1 may include more or fewer components or hardware. For example, the storage device 30 and the flash memory 70 may be deployed together, and one storage device stores the identity key, the CA namespace, and the TA namespace. In addition, storage media that implement functions of the storage device 30 and the flash memory 70 may be the same or different. This is not limited in this application.

The computing device 2 is configured to receive an encrypted data processing result. A hardware structure of the computing device 2 may be the same as a hardware structure of the computing device 1, or may be different from the hardware structure of the computing device 1.

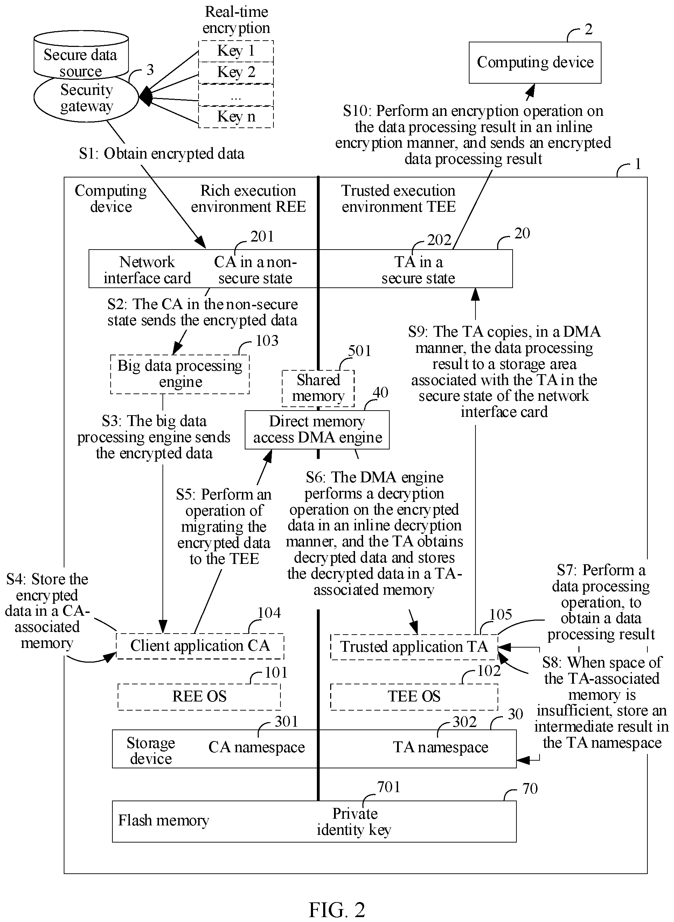

Next, with reference to the data processing system 100 shown in FIG. 1, FIG. 2 is used as an example to further explain the data processing method provided in this application. FIG. 2 is a schematic flowchart of a data processing method according to this application. As shown in the figure, the data processing method includes the following steps. S 1: A CA 201 in a non-secure state of a network interface card 20 obtains encrypted data.

A security gateway 3 may perform an encryption operation on a secure data source, to obtain the encrypted data, and send the encrypted data to the CA 201 in the non-secure state. Optionally, the encryption operation is performed in real time.

In a specific implementation process, a computing device 1 may obtain the encrypted data from the security gateway 3 based on an obtained data processing request, where the data processing request indicates to perform corresponding processing, for example, a data aggregation operation or a data filtering operation, on the encrypted data.

S2: The CA 201 in the non-secure state sends the encrypted data to a big data processing engine 103.

S3: The big data processing engine 103 sends the encrypted data to a CA 104.

The big data processing engine 103 is a control center of big data software. After obtaining the encrypted data, the CA 201 in the non-secure state of the network interface card 20 sends the encrypted data to the big data processing engine 103, so that the big data processing engine 103 selects a combination of a TA and/or a CA that implements a specific function to complete a specific operation of the data processing request, and then sends the encrypted data to the selected CA 104.

Optionally, a data encryption or decryption operation usually needs to obtain a key, and data content is encrypted or decrypted one by one. The foregoing process needs to occupy a large quantity of computing resources of hardware, storage resources, and network resources (for example, a processor in which the big data processing engine is located). An excessively large amount of to-be-processed data causes excessively long processing duration of the encryption or decryption operation, and affects efficiency. In addition, limited by a processing capability of hardware (for example, a DMA engine) that implements an encryption or decryption function, the excessively large amount of to-be-processed data may lead to a processing failure. Generally, preprocessing is performed on to-be-processed data, to divide the to-be-processed data into a plurality of data blocks, and a DMA engine 40 respectively performs encryption operations on the plurality of data blocks, to improve data processing efficiency. Therefore, the big data processing engine 103 may be further configured to preprocess the encrypted data, to be specific, divide the encrypted data into a plurality of data blocks, and send one or more data blocks to the selected CA. Optionally, when a plurality of DMA engines 40 are configured in the computing device 1, after the big data processing engine 40 divides the to-be-processed data into the plurality of data blocks, the plurality of DMA engines 40 may respectively perform the encryption operations on different data blocks, to further improve data processing efficiency.

S4: The CA 104 stores the encrypted data in a CA-associated memory 502.

S5: The DMA engine 40 performs an operation of migrating the encrypted data to a TEE.

The DMA engine 40 needs to copy the encrypted data to a shared memory 501 associated with the DMA engine, to implement the operation of migrating the encrypted data to the TEE.

In a possible implementation, the DMA engine 40 may monitor a state of the CA-associated memory 502. When the encrypted data that is to be processed exists in the CA-associated memory 502, the encrypted data that is to be processed in the CA-associated memory 502 may be obtained in a DMA manner, and the to-be-processed data is copied to the shared memory 501 associated with the DMA engine 40.

In another possible implementation, after storing the encrypted data in the CA-associated memory 502, the CA 104 sends a notification message to the DMA engine 40, and the DMA engine 40 obtains, in a DMA manner, the encrypted data that is to be processed in the CA-associated memory 502, and copies the to-be-processed data to the shared memory 501 associated with the DMA engine 40.

S6: The DMA engine 40 performs a decryption operation on the encrypted data in an inline decryption manner, and a TA 105 obtains decrypted data and stores the decrypted data in a TA-associated memory 503.

The inline decryption manner indicates a processing manner in which the DMA engine 40 performs the data decryption operation on the encrypted data in a process of migrating the encrypted data from an REE to the TEE. The process of migrating the encrypted data from the REE to the TEE includes the following two cases.

Case 1: If the encrypted data that is to be processed is one piece of data, the foregoing process indicates a process in which the DMA engine determines that a task of migrating the encrypted data needs to be executed (for example, the DMA engine detects that one piece of encrypted data that is to be migrated exists in the CA-associated memory), and migrates the encrypted data to the shared memory, to complete the operation of migrating the encrypted data from the REE to the TEE.

Case 2: If the encrypted data that is to be processed is a plurality of pieces of data, the foregoing process indicates a process in which the DMA engine determines that a task of migrating the encrypted data needs to be executed (for example, the DMA engine detects that a plurality of pieces of encrypted data that is to be migrated exist in the CA-associated memory), and migrates, to the shared memory, all the encrypted data that is to be migrated, to complete the operation of migrating the plurality of pieces of encrypted data from the REE to the TEE.

Further, the DMA engine 40 may determine an encryption key based on an identifier of an encryption algorithm included in the encrypted data, and decrypt the encrypted data by using the encryption key. The encryption key may be obtained based on a private identity key stored in a flash memory 70. For example, a matching private identity key 701 in the flash memory 70 is queried for based on the identifier of the encryption algorithm. Specifically, the encryption key may be pre-stored in the flash memory 70, and the DMA engine 40 may obtain, based on the identifier of the encryption algorithm, the identity key that matches the encryption algorithm and that is found in the flash memory. The TA 105 may obtain the decrypted data and store the decrypted data in the TA-associated memory 503. Optionally, the TA 105 may obtain the decrypted data in the DMA manner, so that the TA 105 continues to perform data processing operations such as aggregation and filtering.

It should be noted that the DMA engine 40 may directly obtain the private identity key 701 in the flash memory 70, or the TA 105 may obtain the private identity key 701 in the flash memory 70 and send the private identity key 701 to the DMA engine 40.

S7: The TA 105 performs a data processing operation on the decrypted data, to obtain a data processing result.

It can be learned from the foregoing descriptions that, for a processing process involving sensitive user data, the big data processing engine 40 may select, based on a data processing request (for example, a filtering processing request or an aggregation processing request) received over an API of a data processing system and based on a service requirement, a combination of the TA and/or the CA that implements a specific function to complete a specific operation of the data processing request. For example, the CA 104 and the TA 105 are selected based on a data aggregation request to perform a data aggregation operation. In this case, in step S7, the TA performs the aggregation operation on the received decrypted data, and uses a generated result of the aggregation operation as the data processing result.

In a possible implementation, to extend a storage resource of the TEE, a TA namespace 302 may be configured in a storage device 30, and the namespace 302 is used to store temporary data such as an intermediate result. Specifically, when available storage space of the TA-associated memory 502 is insufficient, to be specific, available space of the TA-associated memory 502 is less than a size of the temporary data such as the to-be-stored intermediate result, step S8 may be performed. When available space of the TA-associated memory 502 is sufficient, to be specific, available space of the TA-associated memory 502 is greater than or equal to a size of the temporary data such as the to-be-stored intermediate result, step S9 may be directly performed.

S8: When the available storage space of the TA-associated memory 502 is insufficient, store the intermediate result in the TA namespace 302.

The TA-associated memory 502 is memory space allocated by a TEE OS 102 to the TA 105. A size of memory space allocated to the TA is fixed and cannot be dynamically adjusted, and in a data processing process, a large amount of temporary data such as the intermediate result may also need to be stored in the TA-associated memory 502. Therefore, if the available storage space of the TA-associated memory 502 is insufficient, the large amount of temporary data such as the intermediate result cannot be stored, resulting in a data processing failure. To resolve the foregoing problem, the TA namespace 301 may be configured in the storage device 30. When the available storage space of the TA-associated memory 503 is insufficient, the large amount of temporary data such as the intermediate result is stored in the TA namespace 302.

In another possible embodiment, to improve data security, the data to be stored in the TA namespace 302 may be further encrypted and then stored in the TA namespace 302.

S9: The TA 105 copies the data processing result to a storage area 221 associated with a TA in a secure state of the network interface card 20.

A storage device 220 of the network interface card 20 includes the storage area 221 associated with the TA in the secure state. A size of the storage area 221 associated with the TA in the secure state may be set based on a size of the encrypted data. For example, the size of the storage area 221 associated with the TA in the secure state is determined based on a preset multiple of the size of the encrypted data, to ensure that the storage area 221 associated with the TA in the secure state can have sufficient storage space for storage. The preset multiple may be set based on an empirical value, or may be determined based on a statistical average value of historical data. Optionally, the storage area 221 associated with the TA in the secure state may be further configured based on a type of the big data software. For example, for compute-intensive big data software, the storage area may be configured based on a service requirement of this type of big data software.

After completing data processing, the TA 105 may copy the data processing result to the storage area 220 associated with the TA in the secure state of the network interface card 20, so that the TA 202 in the secure state of the network interface card 20 can perform the encryption operation on the data processing result in an inline encryption manner. Optionally, the TA 105 may copy, in the DMA manner, the data processing result to the storage area associated with the TA in the secure state of the network interface card 20.

S10: The TA 202 in the secure state of the network interface card 20 performs the encryption operation on the data processing result in the inline encryption manner, and sends an encrypted data processing result.

The inline encryption manner is a processing manner in which the TA 202 in the secure state performs the encryption operation on the data processing result in a process of receiving the data processing result, to obtain the encrypted data processing result. In other words, the TA 202 in the secure state of the network interface card may offload an encryption function of the processor, to complete the encryption operation on the data processing result in a data transmission process.

The foregoing process of receiving the data processing result includes the following two cases.

Case 1: If the to-be-processed data processing result is one piece of data, the foregoing process indicates a process in which the TA 202 in the secure state determines that a task of encrypting the data processing result needs to be executed (for example, the TA 202 in the secure state detects that the TA 105 starts to perform an operation of copying the data processing result), and completely copies the data processing result to the storage area 221 associated with the TA in the secure state, to complete copying the data processing result.

Case 2: If the to-be-processed data processing result is a plurality of pieces of data, the foregoing process indicates a process in which the TA 202 in the secure state determines that a task of encrypting the plurality of data processing results needs to be executed (for example, the TA 202 in the secure state detects that the TA 105 starts to perform an operation of copying a first data processing result), and completely copies all the to-be-encrypted data processing results to the storage area 221 associated with the TA in the secure state, to complete copying the plurality of data processing results.

The TA in the secure state may encrypt the data processing result according to a preset policy. The preset policy may be determined based on a data source. For example, when the data source is data of the big data software, an encryption algorithm is used to encrypt the data processing result; or when the data source is data of payment software, another encryption algorithm is used to encrypt the data processing result.

It should be noted that an encryption algorithm used by the TA in the secure state is not limited in this application. During specific implementation, the encryption algorithm may be configured based on a service requirement.

Further, the TA in the secure state sends the encrypted data processing result to a second computing device, and the second computing device continues to execute another task, including performing corresponding data processing based on a new data processing request or sending the encrypted data processing result over the API. In this application, specific operation steps performed by the second computing device on the data processing request are not limited. During specific implementation, the specific operation steps may be configured based on a service requirement of the big data software.

It can be learned from the descriptions of the foregoing method that, in the data processing method provided in this application, the DMA engine performs the decryption operation only in the inline decryption manner, to be specific, performs the decryption operation on the encrypted data in the process of migrating the encrypted data from the REE to the TEE, to offload the decryption function of a CPU that runs the TA and the CA in a conventional technology, and avoid a problem that a resource of the CPU is occupied and performance of system data processing is affected because the CA and the TA need to copy data to a memory for a plurality of times when performing the data decryption operation, and the CPU in which the CA and the TA are located needs to frequently interact with the memory. In addition, because the DMA engine can implement the decryption function by using a hardware logic circuit or the processor and the storage device in the DMA engine, a manner of offloading the decryption function by hardware is implemented, and a processing speed is faster than that of the conventional technology. In another aspect, a CA namespace and the TA namespace are configured in the storage device, and the encryption operation is performed before data is stored in the TA namespace. This not only extends the storage resource of the TEE, but also ensures secure storage of the data. In still another aspect, the network interface card supports isolation between the CA in the secure state and the TA in the non-secure state. The data processing result of the encrypted data in the TEE is securely and transparently transmitted to the TA in the secure state of the network interface card, and the TA in the secure state implements a hardware encryption function in the inline encryption manner, to offload an encryption function of the CPU that runs the TA and the CA in the conventional technology. In addition, the network interface card may implement inline decryption of data in a migration process of the data processing result by using the internal processor and storage device, avoiding a problem, in the conventional technology, of poor performance caused by frequently accessing the memory by the CPU running the TA to perform the encryption operation, and further improving processing performance of secure data transmission.

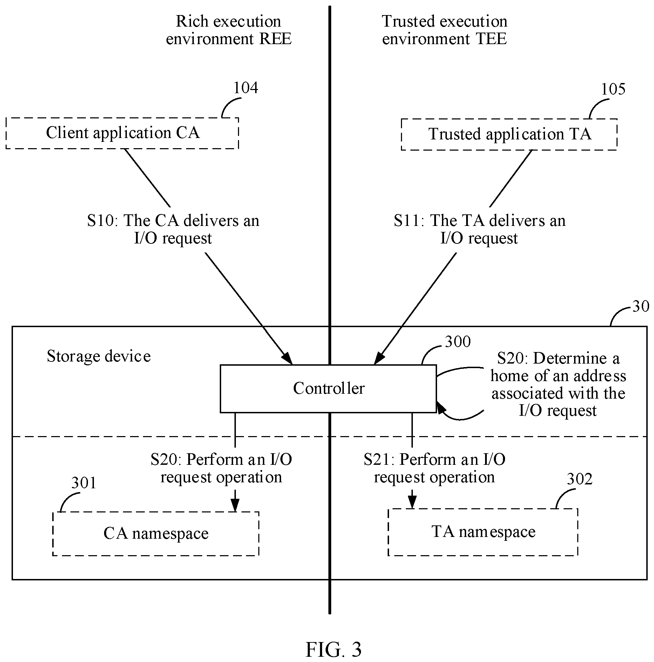

With reference to FIG. 3, the following further explains an implementation process of the solution of extending the storage resource of the TEE in step S8 in FIG. 2.

FIG. 3 is a schematic flowchart of a data processing process in the storage device 30 that supports the CA namespace 301 and the TA namespace 302 according to this application. As shown in the figure, the data processing method includes the following steps.

S10: The CA 104 delivers an I/O request.

S11: The TA 105 delivers an I/O request.

S20: A controller 300 of the storage device 30 determines a home of an address associated with the I/O request.

S20: The controller 300 performs an I/O request operation in the CA namespace 301.

S21: The controller 300 performs an I/O request operation in the TA namespace 302.

The controller 300 of the storage device 30 may receive the I/O requests from the CA 104 and the TA 105, determine homes of the I/O requests based on addresses associated with the I/O requests, to be specific, determine, based on the address associated with the I/O request, whether an address to be accessed by the I/O request belongs to the CA namespace 301 or the TA namespace 302, and perform a specific operation of the I/O request operation in the CA namespace 301 or the TA namespace 302.

In a possible embodiment, the storage device 30 may further include an encryption and decryption unit, configured to: when the I/O operation is a write operation, before data is written into the TA namespace 302, perform an encryption operation on the to-be-written data, and store a result of the encryption operation in the TA namespace 302; or when the I/O operation is a read operation, obtain to-be-read data from the TA namespace 302, perform a decryption operation on the to-be-read data, and send a result of the decryption operation to the TA 105, to improve security of data storage.

For example, the operation step involved in step S8 in FIG. 1 is used as an example. When available storage space of the TA-associated memory 503 is insufficient, an intermediate result may be stored in the TA namespace 302. In this case, the I/O request delivered by the TA 105 to the controller 300 is an operation request for writing data. The controller 300 may perform the encryption operation on the intermediate result, and then store an encrypted intermediate result in the TA namespace 302. When the TA 105 needs to perform another operation with reference to the intermediate result, for example, the TA 105 needs to perform an aggregation operation based on the intermediate result and newly obtained data, the TA 105 needs to read the intermediate result from the controller 300, that is, the I/O request sent by the TA 105 to the controller 300 is a read request. In this case, after obtaining the encrypted intermediate result, the controller 300 first performs the decryption operation to obtain the intermediate result, and then sends the intermediate result to the TA 105.

In another possible embodiment, an encryption and decryption unit in the storage device 30 may be integrated into a hardware unit of the controller 300, or may be an independent hardware unit.

In another possible embodiment, when available storage space of the CA 104-associated memory 502 is insufficient, the CA namespace 301 may alternatively be used to store data. A difference from a manner of storing data in the TA namespace 302 is that there is no need to perform the encryption or decryption operation on data associated with the I/O request.

The storage device is set and divided to obtain a namespace in a secure state and a namespace in a non-secure state. When the available storage space of the CA-associated memory or the TA-associated memory is insufficient and cannot meet a large amount of temporary data such as the intermediate result, the TAnamespace and the CA namespace may be used to store the data, to extend available storage resources of the CA and the TA. In addition, for the TA namespace, the data encryption or decryption operation may be implemented by using the encryption and decryption unit and/or the controller of the storage device, to ensure secure data storage in a TEE.

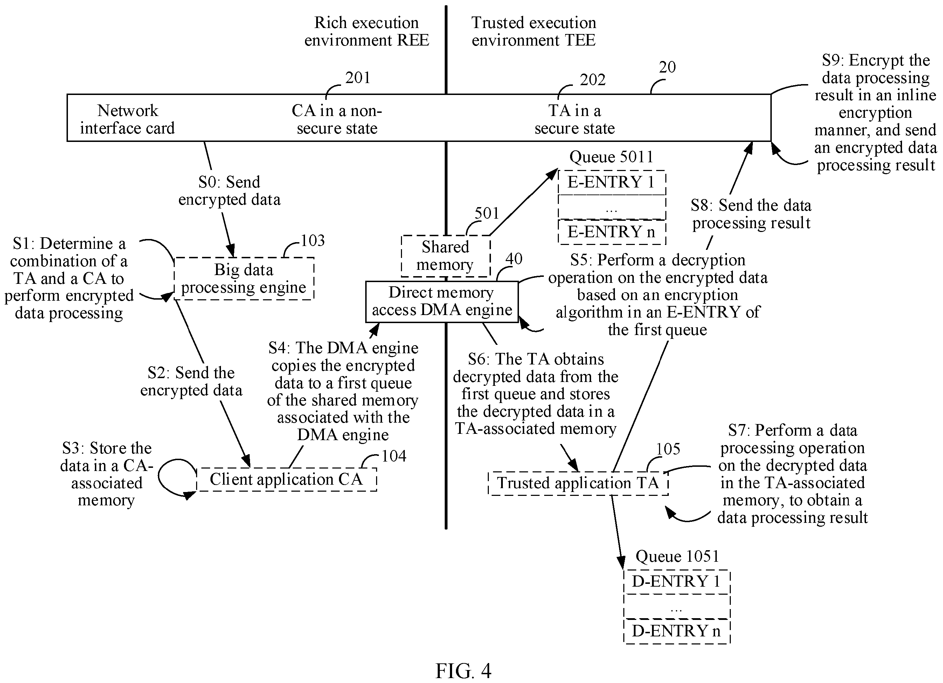

With reference to FIG. 4, the following further explains a processing process of how the DMA engine performs data decryption in the inline decryption manner in step S2 to step S6 in FIG. 2. As shown in the figure, the method includes the following steps.

S0: The CA 201 in the non-secure state of the network interface card 20 sends the encrypted data to the big data processing engine 103.

S 1: The big data processing engine 103 determines a combination of the TA and/or the CA to perform encrypted data processing.

S2: The big data processing engine 103 sends the encrypted data to the CA 104.

S3: The CA 104 stores the data in the CA-associated memory 502.

A processing process of step S0 to step S3 is the same as that of step S2 to step S4 in FIG. 1. For brevity, details are not described herein again.

S4: The DMA engine 40 copies the encrypted data to a first queue of the shared memory 501 associated with the DMA engine.

S5: The DMA engine 40 performs the decryption operation on the encrypted data based on the identifier of the encryption algorithm included in the encrypted data associated with an entry of the first queue.

S6: The TA 105 obtains the decrypted data from the first queue and stores the decrypted data in the TA-associated memory 503.

S7: The TA 105 performs the data processing operation on the decrypted data in the TA-associated memory 503.

The shared memory 501 includes a queue used to store the encrypted data, the first queue includes a plurality of entries (ENTRY), and each entry is used to store one or more pieces of encrypted data. For ease of description, the queue for storing the encrypted data is referred to as a first queue, and an entry in the first queue for storing the encrypted data is referred to as an E-ENTRY. For example, a queue 5011 shown in FIG. 4 is a first queue, and includes a plurality of entries, for example, an E-ENTRY 1, ..., and an E-ENTRY n. When receiving a plurality of pieces of encrypted data, the DMA engine 40 may sequentially store the encrypted data in the E-ENTRIES of the first queue in a sequence of obtaining the plurality of pieces of encrypted data by the DMA engine 40.

In a possible implementation, the queue 5011 may be implemented by using a ring queue, that is, a head pointer indicates a location of an entry that can currently store data, and a tail pointer indicates a location of a current entry of to-be-read data. The DMA engine 40 may sequentially store the obtained encrypted data in the ring queue based on the location indicated by the head pointer, and the DMA engine 40 may sequentially perform decryption operations on the encrypted data in the entries in a first-in-first-out (first-in-first-out, FIFO) manner based on the location indicated by the tail pointer, and implement cyclic usage of queue resources.

In a possible implementation, data transmission may be performed between the DMA engine 40 and the TA 105 in a pipeline (pipeline) manner. After decrypting one piece of encrypted data, the DMA engine 40 notifies the TA 105 to obtain decrypted data, and the TA 105 can obtain the decrypted data.

In another possible implementation, in addition to implementing data transmission between the DMA engine 40 and the TA 105 in the pipeline manner, the DMA engine 40 can reuse the entry of the queue 5011 in which the encrypted data is located, that is, store the decrypted data in the entry for storing the encrypted data, for example, store the decrypted data in an E-ENTRY associated with the original encrypted data. For ease of description, an entry for storing the decrypted data is referred to as a D-ENTRY

Optionally, in addition to storing the decrypted data by reusing the queue 5011, the shared memory 501 may further include a second queue (not shown in the figure), and the DMA engine 40 may store the decrypted data by using the second queue.

Further, the DMA engine 40 communicates with the TA 105 in an inter-process manner. After completing a decryption operation on one or more pieces of encrypted data, the DMA engine 40 notifies the TA 105, and the TA 105 can obtain decrypted data and store the decrypted data in the TA-associated memory. Optionally, the TA 105 may obtain the decrypted data in the DMA manner, and store the decrypted data in the TA-associated memory.

Optionally, the TA-associated memory 503 may also include a queue. The queue includes a plurality of entries, and each entry is used to store one or more pieces of decrypted data. For example, a queue 1051 in FIG. 4 includes a D-ENTRY 1, ..., and a D-ENTRY n. For ease of description, the queue 1051 is referred to as a third queue. Specifically, the decrypted data may be sequentially stored in the D-ENTRIES of the first queue in a sequence of obtaining the decrypted data by the TA.

Correspondingly, the TA 105 may also sequentially perform a data processing process of the decrypted data in the FIFO manner.

S8: The TA 105 sends the data processing result to the TA 202 in the secure state of the network interface card 20. S9: The TA 202 in the secure state of the network interface card 20 encrypts the data processing result in the inline encryption manner, and sends the encrypted data processing result.

Step S8 and step S9 are the same as step S9 and step S 10 in FIG. 1. For brevity, details are not described herein again. In a possible embodiment, in addition to using a queue for data processing, another data structure, for example, a form of a database or a table, may also be used to implement data storage. In addition, the network interface card and the TA may use a same data structure, or may use different data structures.

It can be learned from the descriptions of the foregoing method that, in the data transmission method provided in this application, the DMA engine performs the data decryption operation in the data transmission process between the REE and the TEE, to offload the decryption function of the CPU in which the TA is located, and decrypt the encrypted data in the inline decryption manner, thereby avoiding the problem that the resource of the CPU is occupied and performance of system data processing is affected because the CPU in which the TA is located needs to frequently interact with the memory due to a plurality of times of data copy and data decryption in a process in which the TA decrypts data. In addition, because the DMA engine is a hardware processing unit, the data decryption operation may be directly performed by using hardware logic. This avoids a problem of low processing efficiency caused by frequent invoking of computer program instructions in the memory when the CPU performs the decryption operation in a software manner, and also improves security of data transmission.

It may be understood that, to implement functions in the foregoing embodiments, a computing node includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

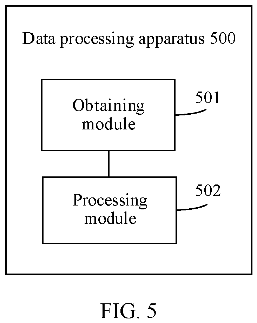

The foregoing describes, in detail with reference to FIG. 1 to FIG. 4, the data processing method provided in embodiments. The following further describes, with reference to FIG. 5, a data processing apparatus provided in this application. FIG. 5 is a diagram of a structure of a data processing apparatus 500 according to an embodiment of this application. As shown in the figure, the data processing apparatus 500 includes an obtaining module 501 and a processing module 502.

The obtaining module 501 is configured to obtain encrypted data that is to be processed in a rich execution environment REE in a first computing device, where the first computing device includes the REE running a general operating system and a trusted execution environment TEE running a trusted operating system.

The processing module 502 is configured to: migrate the encrypted data to the TEE; and perform a decryption operation on the encrypted data in a process of migrating the encrypted data to the TEE, to obtain decrypted data, where an inline decryption manner indicates a processing manner in which a DMA engine performs the decryption operation in the process of migrating the data between the REE and the TEE.

The data processing apparatus 500 according to this embodiment of this application of the present invention may correspondingly perform the method described in embodiments of this application of the present invention, and the foregoing and other operations and/or functions of the units in the data processing apparatus 500 are respectively used to implement corresponding procedures of the method in FIG. 2 to FIG. 4. For brevity, details are not described herein again.

In a possible implementation, the processing apparatus 500 may be implemented by the DMA engine. The DMA engine includes a processor and a storage device. The storage device stores computer program instructions, and the processor executes the computer program instructions, to implement functions of the obtaining module 501 and the processing module 502.

Optionally, the DMA engine may be a system on chip, the storage device may be an on-chip cache, the on-chip cache is configured to store the computer program instructions, and the processor executes the computer program instructions stored in the on-chip cache, to implement the functions of the obtaining module 501 and the processing module 502.

In addition, the DMA engine may be further configured to implement operation steps of corresponding procedures performed by the DMA engine in the method in FIG. 2 to FIG. 4. For brevity, details are not described herein again. In another possible implementation, the processing apparatus 500 may be further implemented by a DMA engine including a processor and a power supply circuit, and the power supply circuit may supply power to the processor. The processor may be implemented by a hardware logic circuit. For example, an application-specific integrated circuit ASIC implements a function of the DMA engine. The power supply circuit may be located in a same chip as the processor, or may be located in a chip other than the chip in which the processor is located. The power supply circuit includes but is not limited to at least one of the following: a power supply sub-system, a power management chip, a power consumption management processor, or a power consumption management control circuit. The processor may be configured to implement functions of the obtaining module 501 and the processing module 502. Optionally, the DMA engine is an independent chip.

In addition, the processor is further configured to implement operation steps of corresponding procedures performed by the DMA engine in the method in FIG. 2 to FIG. 4. For brevity, details are not described herein again.

This application further provides a computing device 1, as shown in FIG. 1. The computing device 1 includes a processor 10, a network interface card 20, a storage device 30, and a DMA engine 40. The processor 10, the network interface card 20, the storage device 30, and the DMA engine 40 are coupled through a bus 60, and are respectively configured to perform operation steps of corresponding procedures performed by corresponding bodies in the method in FIG. 2 to FIG. 4. For brevity, details are not described herein again.

This application further provides a data processing system 100, as shown in FIG. 1. The data processing system 100 includes a plurality of computing devices, for example, a computing device 1 and a computing device 2. The computing device 1 includes a processor 10, a network interface card 20, a storage device 30, and a DMA engine 40. The processor 10, the network interface card 20, the storage device 30, and the DMA engine 40 are coupled through a bus 60. The computing device 2 is configured to receive a data processing result sent by the computing device 1. A structure of the computing device 2 may be the same as that of the computing device 1, or may be different from that of the computing device 2. The processor 10, the network interface card 20, and the DMA engine 40 in the computing device 1 are respectively configured to perform operation steps of corresponding procedures performed by corresponding bodies in the method in FIG. 2 to FIG. 4. For brevity, details are not described herein again.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A data processing method, wherein the method comprises:
obtaining, by a direct memory access DMA engine of a first computing device, encrypted data that is to be processed in a rich execution environment REE of the first computing device, wherein the first computing device comprises the REE running a general operating system and a trusted execution environment TEE running a trusted operating system;
performing, by the DMA engine, an operation of migrating the encrypted data to the TEE; and
performing, by the DMA engine, a decryption operation on the encrypted data in a process of migrating the encrypted data to the TEE, to obtain decrypted data.

2. The method according to claim 1, wherein the first computing device further comprises a processor and a memory, the processor separately runs a client application CA and a trusted application TA, the memory comprises a shared memory and a CA-associated memory, the shared memory is accessible to the trusted application TA, and that the DMA engine migrates the encrypted data to the TEE environment comprises:
copying, by the DMA engine to the shared memory, the encrypted data stored in the CA-associated memory.

3. The method according to claim 1 or 2, wherein the performing, by the DMA engine, a decryption operation on the encrypted data in a process of migrating the encrypted data to the TEE, to obtain decrypted data comprises:
performing the decryption operation on the encrypted data in a sequence of obtaining the encrypted data and other encrypted data and based on an identity key associated with the encrypted data, to obtain the decrypted data.

4. The method according to claim 2, wherein the memory further comprises a TA-associated memory, and the method further comprises:
obtaining, by the TA, the decrypted data from the shared memory;
storing, by the TA, the decrypted data in the TA-associated memory; and
performing, by the TA, a data processing operation on the decrypted data, to obtain a data processing result.

5. The method according to claim 4, wherein the obtaining, by the TA, the decrypted data from the shared memory comprises:
obtaining, by the TA, the decrypted data from the shared memory in a DMA manner.

6. The method according to claim 4, wherein the first computing device further comprises a storage device, the storage device comprises a TA namespace, and the method further comprises:
storing, by the TA, a first intermediate result in the TA namespace, wherein the first intermediate result comprises an intermediate result of performing the data processing operation on the encrypted data.

7. The method according to claim 6, wherein the storage device comprises a controller, and the method further comprises:
before the storing a first intermediate result in the TA namespace, performing, by the controller, an encryption operation on the first intermediate result, to obtain encrypted data of the first intermediate result.

8. The method according to claim 4, wherein the first computing device further comprises a network interface card, the network interface card runs a TA in a secure state, and the method further comprises:
copying, by the TA, the data processing result to a storage area associated with the TA in the secure state in the network interface card; and
performing, by the TA in the secure state, an encryption operation on the data processing result.

9. The method according to claim 8, wherein the performing, by the TA in the secure state, an encryption operation on the data processing result comprises:
performing, by the TA in the secure state, the encryption operation on the data processing result in a process of receiving the data processing result, to obtain an encrypted data processing result; and
the method further comprises:
sending, by the TA in the secure state, the encrypted data processing result to a second computing device.

10. The method according to claim 8, wherein the network interface card further comprises a CA in a non-secure state, the CA in the non-secure state and the TA in the secure state are run in a processor of the network interface card, and resources used by the CA in the non-secure state and the TA in the secure state to transmit data are isolated from each other.

11. A DMA engine, wherein the DMA engine comprises a processor and a storage device, the storage device stores computer program instructions, and the processor executes the computer program instructions in the storage device, to implement functions of operation steps performed by the DMA engine in the method according to any one of claims 1 to 3.

12. The DMA engine according to claim 11, wherein the DMA engine is integrated into a processor of a computing device in which the DMA engine is located, the DMA engine, the processor, a network interface card of the computing device, a storage device of the computing device, and a memory of the computing device are connected through a bus, and the bus comprises at least one of a peripheral component interconnect express PCIe bus, a compute express link CXL bus, or a unified bus UB.

13. The DMA engine according to claim 11, wherein the DMA engine is independent hardware, a processor of a computing device in which the DMA engine is located, the DMA engine, a network interface card of the computing device, a storage device of the computing device, and a memory of the computing device are connected through a bus, and the bus comprises at least one of a peripheral component interconnect express PCIe bus, a compute express link CXL bus, and a unified bus UB.

14. A DMA engine, wherein the DMA engine comprises a processor and a power supply circuit, the power supply circuit is configured to supply power to the processor, and the processor is configured to implement functions of operation steps performed by the DMA engine in the method according to any one of claims 1 to 3.

15. The DMA engine according to claim 11, wherein the DMA engine is integrated into a processor of a computing device in which the DMA engine is located, the DMA engine, the processor, a network interface card of the computing device, a storage device of the computing device, and a memory of the computing device are connected through a bus, and the bus comprises at least one of a peripheral component interconnect express PCIe bus, a compute express link CXL bus, and a unified bus UB.

16. The DMA engine according to claim 11, wherein the DMA engine is independent hardware, a processor of a computing device in which the DMA engine is located, the DMA engine, a network interface card of the computing device, a storage device of the computing device, and a memory of the computing device are connected through a bus, and the bus comprises at least one of a peripheral component interconnect express PCIe bus, a compute express link CXL bus, and a unified bus UB.

17. A computing device, comprising a direct memory access DMA engine, a processor, a network interface card, and a storage device, wherein the DMA engine, the processor, the network interface card, and the storage device are respectively configured to implement functions of operation steps performed by the DMA engine, the processor, the network interface card, and the storage device in the method according to any one of claims 1 to 10.
